# FASCICULE DE BREVET EUROPEEN

(11) **EP 2 766 964 B1**
(45) Date de publication et mention de la délivrance du brevet: **27.04.2016**
(21) Numéro de dépôt: 12769305.9
(22) Date de dépôt: 15.08.2012
(51) Int. Cl.: H02G 1/08, B65H 75/00

(54) **DISPOSITIF TIRE-FIL POUR LE CÂBLAGE ÉLECTRIQUE**
DRAHTZIEHVORRICHTUNG ZUR VERLEGUNG VON STROMKABELN
WIRE-PULLING DEVICE FOR LAYING ELECTRIC CABLES

(30) Priorité: 12.09.2011 CH 15052011
(43) Date de publication de la demande: 20.08.2014
(73) Titulaire: Robotic Consulting S.à.r.l., 1470 Estavayer-le-Lac (CH)
(72) Inventeur: PASSONI, Gianfranco, CH-1473 Châtillon (CH)
(86) Numéro de dépôt international: PCT/CH2012/000191
(87) Numéro de publication internationale: WO 2013/037075

(56) Documents cités:
- US-A- 2 718 376
- US-A- 4 413 808

## Description

### Domaine technique

La présente invention a pour objet un dispositif tire-fil, notamment pour le câblage électrique dans un bâtiment, ce dispositif comportant un corps, un enroulement d'un élément allongé souple enroulé en bobine et des moyens pour dérouler cet élément et le faire avancer dans un tronçon de conduit d'une installation électrique, ledit enroulement étant monté sur un tambour rotatif entraîné par un mécanisme, ledit tambour présentant une section en U dans lequel est enroulé l'élément allongé souple, ce dernier étant introduit dans un organe de guidage rigide disposé tangentiellement par rapport à la périphérie dudit tambour rotatif.

### Technique antérieure

Le problème d'introduire des câbles électriques dans des conduits ou gaines est connu depuis longtemps. On trouvera un exposé de ce dernier dans la demande de brevet publiée WO 2010/111801.

Actuellement ce problème a été résolu notamment par des dispositifs comme ceux exposés, par exemple, dans les publications US 2556484 (publiée le 12.06.1951), US 6722603 (publiée le 20.04.2004) et US 4413808 (publiée le 08.11.1983).

Le dispositif décrit dans le document US2556484 expose un dispositif tire-fil, notamment pour le câblage électrique dans un bâtiment, ce dispositif comportant un corps, un enroulement d'un élément allongé souple enroulé en bobine et des moyens pour dérouler cet élément et le faire avancer dans un tronçon de conduit d'une installation électrique, ledit enroulement étant monté sur un tambour rotatif entraîné par un mécanisme, ledit tambour présentant une section en U dans lequel est enroulé l'élément souple, l'élément allongé souple étant introduit dans un organe de guidage rigide disposé tangentiellement par rapport à la périphérie dudit tambour rotatif. Bien que ce dispositif semble décrire un appareil pouvant fonctionner, cet appareil doit avoir de grandes difficultés à être utilisé. Car lors du poussage de l'élément souple dans un conduit la force de poussage due aux coudes et aux frottements dudit élément ira en augmentant, et l'élément souple aura tendance à faire des vagues vers l'extérieur, qui viendront en appui sur les rouleaux et sur le boîtier jusqu'au moment où le moteur d'entraînement se bloquera. De plus, ce dispositif nécessitera la présence d'au moins deux ouvriers.

Le document US 6722603 décrit un dispositif relativement simple qui ne dit rien en ce qui concerne la force de réaction au moment de l'introduction de l'élément souple dans un conduit. Ce dispositif demande aussi la présence de deux ouvriers, un pour tenir le dispositif et un second pour accrocher les fils.

Le document US 4413808 décrit un dispositif réalisant les mêmes opérations que le dispositif décrit dans le document US2556484 dans lequel pour remédier au problème de résistance aux frottement il a été prévu un extracteur mécanique pour l'élément allongé souple enroulé dans une boîte cylindrique. L'extracteur mécanique est constitué d'un grand nombre de pignons s'engrenant les uns avec les autres, ce qui complique et alourdit ledit dispositif.

### Exposé de l'invention

L'invention a pour buts de fournir un dispositif qui ne présente pas les inconvénients des dispositifs connus. C'est-à- dire un dispositif qui peut être utilisé par un seul ouvrier, et qui ne présente pas les inconvénients des dispositifs connus, notamment les possibilités de blocage du système mécanique, voire sa rupture.

Ces buts sont atteints avec le dispositif tire-fil selon l'invention défini à la revendication 1.

En effet, dans un dispositif selon l'invention l'élément souple allongé est poussé vers l'extérieur par le fait de son déroulement, de plus il ne pourra pas faire des vagues entre les galets de guidage car ces derniers présentent un diamètre plus grand dans leur partie centrale que dans leurs parties latérales, et son entraînés par les parois du cylindre central, ce qui fait que la vitesse périphérique est plus grande que celle du tambour, donc l'élément souple est poussé vers l'extérieur.

L'invention sera mieux comprise et ses caractéristiques apparaîtrons plus clairement à la lecture de la description de formes d'exécution, donnée uniquement à titre d'exemple, en regard des dessins sur lesquels:
La figure 1 a représente une coupe schématique d'une forme d'exécution d'un dispositif tire-fil selon l'invention.
La figure 1b représente une coupe schématique d'une variante de la forme d'exécution représentée à la figure 1a.
La figure 1c représente une coupe d'un détail de la forme d'exécution représentée à la figure 1 b.
La figure 2 représente un détail du dispositif représenté à la figure 1 a.
La figure 3 représente une coupe du détail représenté à la figure 2.
La figure 4 représente une vue en perspective du détail représenté à la figure 2.
La figure 5 un schéma bloc de la commande du moteur d'entraînement du tambour.
Les figures 6 et 7 représentent une forme d'exécution du dispositif qui permet de bloquer le dispositif tire-fil représenté aux figures 1 a et 1 b dans un conduit.

### Meilleure manière de réaliser l'invention

On notera que dans toutes les figures les mêmes signes de référence ont été utilisés pour désigner les mêmes caractéristiques.

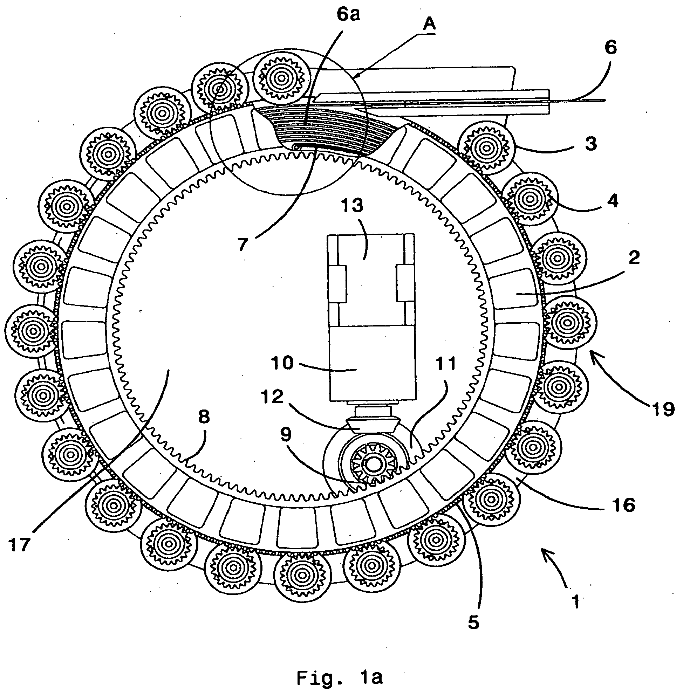

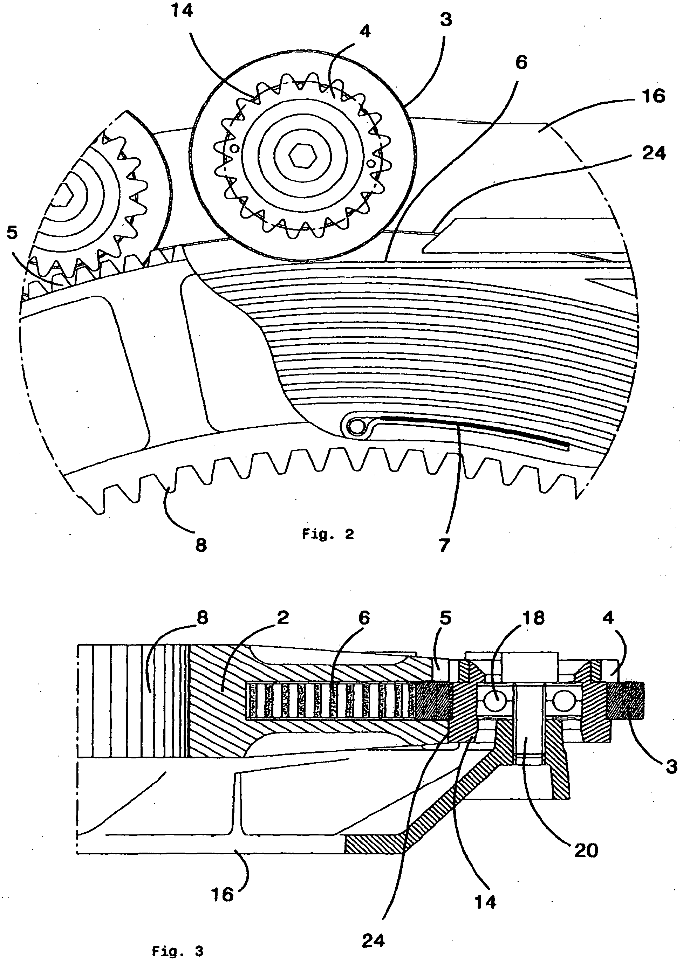

Comme on le voit sur la figure 1a un dispositif tire-fil 1 pour le câblage électrique, selon l'invention, comporte un châssis 16 servant de support à un tambour 2 ayant une section en U et portant un enroulement 6a d'un élément allongé souple 6, par exemple une bande d'acier à ressort ou un fil. Le châssis 16 est pourvu d'un évidement central 17 dans lequel est logé un moteur 13 avec un réducteur 10 d'entraînement. Le moteur d'entraînement 13 reçoit son énergie d'une batterie, non représentée, et est couplé à un pignon d'entraînement 12 qui est en prise avec une couronne 11 solidaire d'un pignon 9 entraînant une denture 8 disposée sur le tambour 2. Le tambour 2 entraîne dans sa rotation des galets de guidage 19 disposés à la périphérie dudit tambour 2 sur le châssis 16. Les galets montés sur roulement à billes 18 sont fixés au châssis 16 par des vis 20. Dans la forme d'exécution représentée les galets 19 sont entraînés par une denture 5 disposée sur la partie extérieure d'une des branches du U du tambour 2 et s'engrène avec une denture 4 disposée sur une partie latérale des galets 19. Dans une autre forme d'exécution non représentée il n'y a pas de denture sur la partie extérieure des branche dudit U, ni de denture sur les galets de guidage, et les galets de guidage sont seulement entraînés par frottement sur la partie supérieure des branches du U. Il est aussi prévu dans une autre forme d'exécution, non représentée, des dentures sur l'extérieur des deux branches dudit U et sur les deux parties latérales des galets de guidage. On voit sur la figure 3 que les galets de guidage 19 présente trois parties une première partie latérale 14, une partie centrale 3 de diamètre supérieure à la partie latérale et une deuxième partie latérale 4 présentant une denture et ayant un diamètre inférieure à la partie centrale 3.

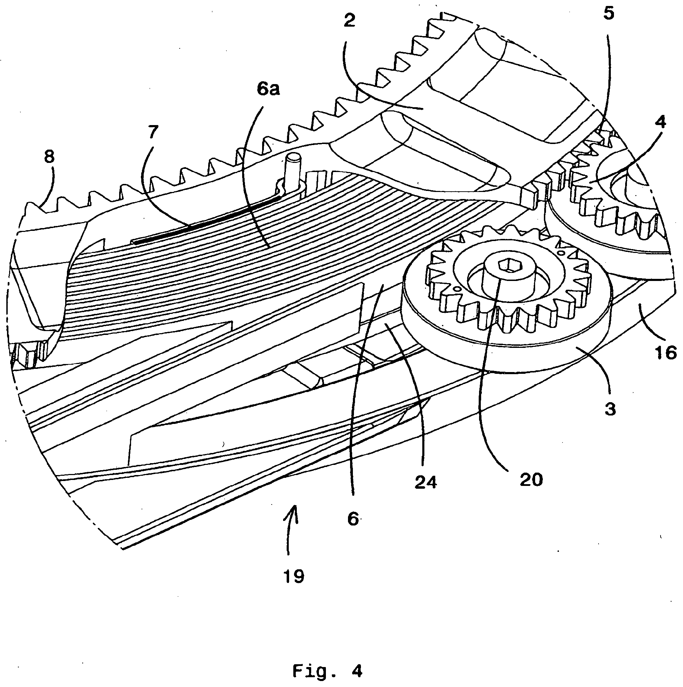

Sur la figure 3 il a été représenté un détail fortement agrandi de la zone de sortie du tambour 2 de l'élément allongé souple 6. Sur la figure 4 on a représenté le même détail qu'à la figure 3 mais en vue perspective.

Les figures 3 et 4 permettent dé mieux comprendre le principe de base de l'invention, expliquant comment l'élément souple allongé 6 est poussé dans un conduit par la force de déroulement dudit élément 6, et les vagues entre deux galets 19 sont empêchées (voir document US2556484). En effet, la circonférence 3 de la partie centrale les galets 19 étant plus grande que celle de ses parties latérales 4 et 14, et étant en contact avec l'élément souple allongé 6, communiquera une vitesse plus grande que celle du tambour 2, ce qui empêchera les spires dudit élément d'être en compression et donc d'être poussées contre les galets. Ces dispositions assurent qu'il ne pourra pas se développer de blocage. Comme on le voit sur les figures 3 et 4 les extrémités extérieures des branches dudit U sont en contact avec les galets de guidage par leurs parties latérales d'un côté par une denture 5 et de l'autre côté 24 par frottement. Enfin, on remarquera comment l'élément 6 est attaché dans le tambour 2 par une partie repliée 7. La rotation du tambour 2 crée une poussée transmise à l'élément allongé souple 6.

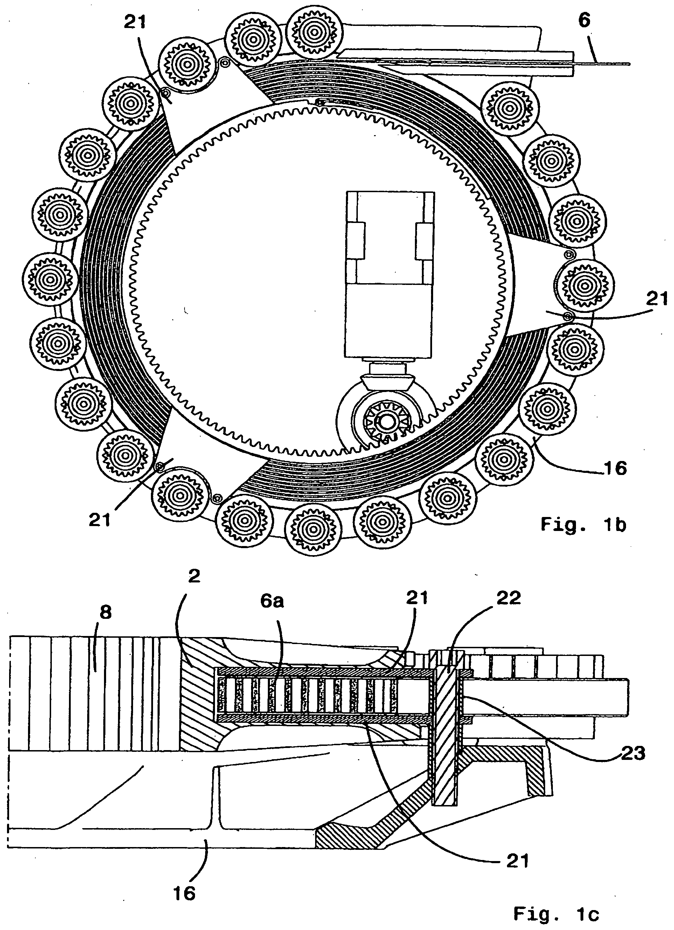

Les figures 1b et 1c représentent une variante de la figure 1a dans laquelle il a été prévu de supprimer tout contact entre l'élément allongé souple 6 et les faces internes dudit U, afin que ledit élément 6 ne soit pas entraîné par les branches dudit U du tambour 2 et que lors du tirage d'un fil l'élément souple allongé descende bien au fond dudit U. Dans ce but il a été prévu de fixer sur le châssis 16 des plaques 21 uniformément répartie sur le pourtour du tambour 2 disposées à l'intérieur dudit U, lesdites plaques 21 présentant un faible coefficient de frottement, par exemple du "Téflon", sont fixées sur le châssis 16 par des vis 22 et maintenues écartées par par exemple à 90°. Ces dispositions des entretoises 23. Les plaques 21 au nombre de trois sont disposées à 120° sur le dispositif représenté, mais on pourrait mettre davantage de plaques et les disposer, évitent toute perturbation lors du tirage d'un fil au moment de l'enroulement de l'élément souple.

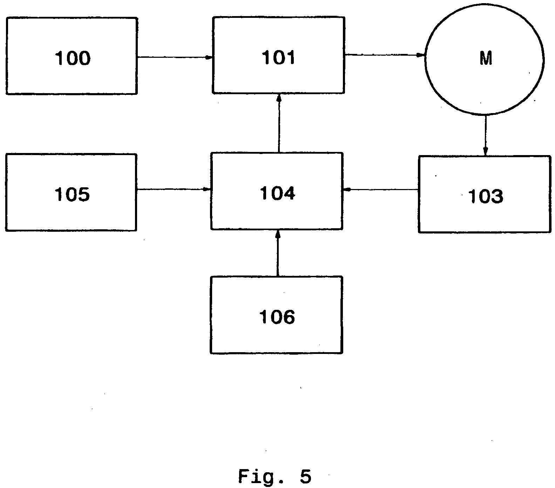

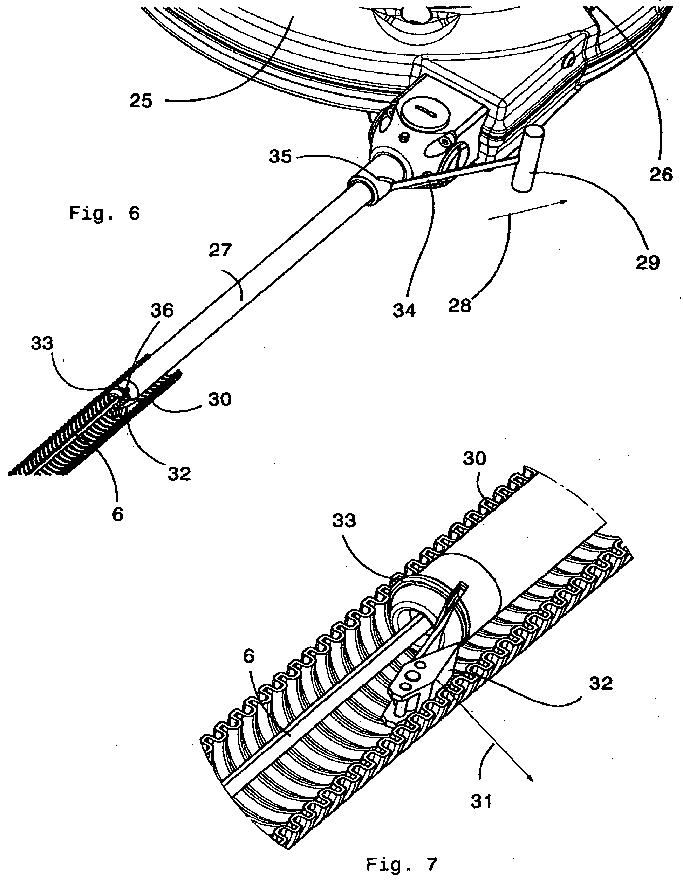

La figure 5 représente une forme de réalisation du schéma bloc de la commande électronique du dispositif tire-fil décrit. L'alimentation 100 est connectée à un amplificateur 101 qui est connectée au motoréducteur M. Le circuit électronique fonctionne en mode réactif au moyen d'une boucle de courant surveillée en continu. Cette boucle comporte une unité de contrôle de courant 103 qui est connectée à un microprocesseur 104 pourvu d'un logiciel embarqué. Les commandes de fonctionnement comportent au moins un bouton poussoir 105 (26 sur la figure 6) qui commande la mise en marche et l'arrêt du motoréducteur. Une unité de consigne de courants 106 comprend des potentiomètres pour déterminer la valeur des intensités du courant d'alimentation. Le microprocesseur analyse en temps réel la consommation de courant du motoréducteur et détermine automatiquement le mode de fonctionnement du dispositif. Des commandes directes sur le bouton de commande ou de brèves tractions sur l'élément allongé souple permettent de piloter les opérations de poussée pendant la première phase opératoire ou de traction pendant la deuxième phase.

Sur les figures 6 et 7 il a été représenté un organe de guidage rigide 27 disposé tangentiellement (voir figure 1) par rapport à la périphérie dudit tambour rotatif. Le tambour rotatif ainsi que son châssis sont disposés dans un boîtier 25.présentant un bouton 26 commandant la marche et l'arrêt du dispositif. L'organe de guidage 27 comporte des moyens destinés à permettre sa fixation dans un conduit 30 dans lequel on veut introduire l'élément souple allongé 6. Afin que le dispositif puisse travailler sans la présence de personne, c'est-à-dire introduire l'élément allongé souple 6 dans le conduit 30. Les moyens destinés à permettre la fixation du dispositif dans un conduit 30 comprennent un tube rigide 27 présentant à son extrémité distale un embout ayant un rebord dissymétrique 33 destiné à venir en appui à l'intérieur du conduit 30 dans lequel est introduit l'élément allongé souple, et une lame flexible 34 mobile présentant à son extrémité distale des moyens 32 permettant de bloquer ledit rebord contre la paroi dudit conduit, et son extrémité proximale une poignée 29. Ladite lame 34 sort à l'extrémité distale du tube 27 par une fente 36 et présente à son extrémité distale un coin 32 appliquant, selon la flèche 31 le rebord 33 contre le conduit 30, lorsque l'on tire sur la lame 34 sortant par la fente 35, selon la flèche 28, sur la poignée 29, comme montré à la figure 7.

Un dispositif tire-fil selon l'invention s'utilise de la manière suivante:
On introduit l'organe de guidage 27 dans le conduit où l'on désire placer des fils et bloque le dispositif dans cette position en tirant sur la poignée 29.
On met en marche le dispositif en actionnant le bouton 26.
On se rend à l'extrémité de sortie du conduit.
Lorsque l'extrémité de l'élément allongé souple apparaît on la saisit et on la stoppe, ce qui arrête le déroulement de l'élément souple.
On attache les fils à l'extrémité de l'élément souple et on imprime une légère traction, ce qui a pour effet de démarrer le rembobinage de l'élément souple.
La même opération est répétée pour tous les conduits dans lesquels on veut placer des fils.

## Revendications

1. Dispositif tire-fil, notamment pour le câblage électrique dans un bâtiment, ce dispositif comportant un châssis (16), un enroulement d'un élément (6, 6a) allongé souple enroulé en bobine et des moyens (2, 13) pour dérouler cet élément et le faire avancer dans un tronçon de conduit d'une installation électrique, ledit enroulement étant monté sur un tambour rotatif (2) entraîné par un mécanisme (13), ledit tambour présentant une section en U dans laquelle l'élément (6) allongé souple est disposé, ce dernier étant introduit dans un organe de guidage (27) disposé tangentiellement par rapport à la périphérie dudit tambour rotatif, **caractérisé en ce que** ledit tambour (2) entraîne un ensemble de galets de guidage (19) disposés à sa périphérie sur un cercle concentrique, chaque galet présentant une section centrale (3) ayant un diamètre plus grand que les deux sections latérales (4; 14) qui l'entourent, les deux sections latérales venant en appui sur les extrémités des branches dudit U du tambour (2), tandis que la section centrale vient en contact avec l'élément souple allongé (6) disposé entre les branche dudit U au moment où le dispositif pousse l'élément souple dans un conduit, mettant ledit élément en compression, le contact de la section centrale ayant une vitesse tangentielle supérieure à la vitesse des branches dudit U avec l'élément souple allongé, et **en ce que** ledit dispositif tire-fil comporte des plaques fixées au châssis (16) à l'intérieur dudit U supprimant tout contact entre l'élément souple allongé (6) et les branches dudit U, au moment où ledit élément tire un fil dans un tube, mettant ledit élément en traction, et vient s'enrouler sur ledit tambour (2), et **en ce que** ledit dispositif tire-fil comprend un dispositif électronique destiné à commander le moteur (13) d'entraînement dudit tambour (2).

2. Dispositif tire-fil selon la revendication 1, **caractérisé en ce que** lesdits galets de guidage (19) présentent sur une des sections latérales des dents (4) s'engrenant avec des dents disposées sur la branche correspondante du U.

3. Dispositif tire-fil selon l'une des revendications 1 et 2, **caractérisé en ce que** l'organe de guidage (27) comprend un tube présentant à son extrémité distale un embout ayant un rebord dissymétrique destiné à venir en appui à l'intérieur du conduit dans lequel est introduit l'élément allongé souple, et une lame flexible mobile présentant à son extrémité distale des moyens permettant de bloquer ledit rebord contre la paroi dudit conduit.

4. Dispositif tire-fil selon l'une des revendications 1 à 3, **caractérisé en ce qu'**il comporte une carte électronique et un software embarqué, pour permettre le dialogue avec l'opérateur par de simples actions de tractions et pulsions sur l'élément souple, sans l'emploi d'une télécommande.

## Patentansprüche

1. Drahteinziehvorrichtung, insbesondere für die Verlegung elektrischer Leitungen in einem Gebäude, die Vorrichtung besteht aus einem Rahmen (16), der Wicklung eines langgestreckten, flexiblen, zu einer Spule aufgewickelten Elements (6, 6a) und Vorrichtungen (2, 13) zur Abwicklung des Elements und dessen Vorschub in den Leitungsabschnitt einer Elektroinstallation, die Spule sitzt auf einer Drehtrommel (2), die durch einen Mechanismus (13) angetrieben wird, die Trommel weist einen U-förmigen Querschnitt zur Aufnahme des langgestreckten, flexiblen Elements (6) auf, welches in einem tangential zum Umfang der Drehtrommel angeordneten Führungselement (27) läuft, die Vorrichtung ist **dadurch gekennzeichnet, dass** die Trommel (2) mehrere konzentrisch in ihrem Umfang angeordnete Führungsrollen (19) antreibt, wobei jede Rolle einen mittleren Abschnitt (3) mit größerem Durchmesser als die beiden diesen umfassenden Seitenabschnitte (4; 14) aufweist, die beiden Seitenabschnitte liegen auf den Schenkelenden der U-Form der Trommel (2) auf, so dass der mittlere Abschnitt mit dem zwischen den Schenkeln der U-Form angeordneten langgestreckten, flexiblen Element (6) in Kontakt kommt, sobald die Vorrichtung das flexible Element unter Zusammendrücken in eine Leitung schiebt, der Kontakt mit dem mittleren Abschnitt erfolgt mit einer Tangentialgeschwindigkeit, die höher ist als die Geschwindigkeit der Schenkel der U-Form mit dem langgestreckten flexiblen Element, die Drahteinziehvorrichtung besitzt innen an der U-Form des Rahmens (16) befestigte Platten, die den Kontakt zwischen dem langgestreckten, flexiblen Element (6) und den Schenkeln der U-Form dann verhindern, wenn das Element einen Draht in ein Rohr einzieht, wobei das Element gespannt und auf die Trommel (2) aufgewickelt wird, die Drahteinziehvorrichtung besitzt ein elektronisches Bauelement zur Steuerung des Motors (13), der die Trommel (2) antreibt.

2. Drahteinziehvorrichtung nach Anspruch 1, **dadurch gekennzeichnet, dass** die Führungsrollen (19) an einem der Seitenabschnitte Zähne (4) aufweisen, die in die Zähne am entsprechenden Schenkel der U-Form eingreifen.

3. Drahteinziehvorrichtung nach einem der Ansprüche 1 und 2, **dadurch gekennzeichnet, dass** das Führungselement ein Rohr umfasst, dessen distales Ende ein Endstück mit asymmetrischem Flansch besitzt, welches an der Innenseite der Leitung, in die das langgestreckte, flexible Element eingeführt wird, anliegen soll, ebenso eine bewegliche flexible Zunge, deren distales Ende Vorrichtungen aufweist, mithilfe derer sich der Flansch an der Wand der Leitung arretieren lässt.

4. Drahteinziehvorrichtung nach einem der Ansprüche 1 bis 3, **dadurch gekennzeichnet, dass** sie eine Leiterkarte und On-Board-Software für den Dialog mit dem Bediener mithilfe einfacher Zug- und Druckvorgänge auf das flexible Element ohne Einsatz einer Fernbedienung umfasst.

## Claims

1. Wire pulling device, especially for electric wiring in a building, this device has a body (16), winding a flexible elongated element (6, 6a) on a spool and means (2, 13) to unwind this element and move it along a section of pipe in an electrical installation, said spool being mounted on a rotating drum (2) driven by a mechanism (13), the drum has a U section in which the flexible elongated element (6) is placed and introduced in a guiding device (27) placed tangentially in relation to the edges of said rotating drum, **characterised by** the fact that the drum (2) has a set of guide rollers (19) arranged on the drum edge in a concentric circle, each roller having a central section (3) with a larger diameter than the two side sections (4;14) surrounding it, the two side sections support the ends of the branches of the U in the drum (2) while the central section is in contact with the elongated flexible element (6) placed between the branches of said U as the device pushes the flexible element into a pipe, compressing said element, the contact of the central section having a faster tangential speed than the speed of the branches of said U with the elongated flexible element and said wire pulling device has plates fixed to the body (16) inside the U eliminating all contact between the elongated flexible element (6) and the branches of the U at the moment when the element pulls a wire in a pipe, putting the element into traction and winding around the drum (2) and the wire pulling device includes an electronic device for controlling the motor (13) that drives the drum (2).

2. Wire pulling device according to claim 1, **characterised by** the fact that said guide rollers (19) have teeth(4) on one of the side sections that mesh with the teeth arranged on the corresponding branch of the U.

3. Wire pulling device according to one of claims 1 and 2, **characterised by** the fact that the guiding device (27) has a pipe with a nozzle at the distal end with a dissymmetric edge designed to support the flexible elongated element inside the pipe into which it is introduced and a mobile flexible slat with the means at its distal end to block said edge against the pipe wall.

4. Wire pulling device according to one of claims 1 to 3 **characterised by** the fact it has an electronic card and software onboard to enable dialogue with the operator by simple traction and drive actions on the flexible element without using remote control.
